# EUROPEAN PATENT APPLICATION

(11) **EP 4 578 273 A1**
(43) Date of publication of application: **02.07.2025**
(21) Application number: 24218066.9
(22) Date of filing: 06.12.2024
(51) Int. Cl.: A01G 17/06, E04H 17/02

(54) **SIMPLIFIED ELASTIC COMPENSATION DEVICE FOR TENSIONING PLANTS SUPPORT WIRE, SUPPORT SYSTEM FOR SAID PLANTS INCLUDING THIS DEVICE AND RELATED SUPPORT METHOD**

(30) Priority: 28.12.2023 IT 202300028170
(71) Applicant: Bortolussi, Claudio, 33080 Fiume Veneto (PN) (IT); Bortolussi, Franco, 33080 Fiume Veneto (PN) (IT)
(72) Inventor: Bortolussi, Claudio, 33080 Fiume Veneto (PN) (IT); Bortolussi, Franco, 33080 Fiume Veneto (PN) (IT)
(74) Representative: Giugni, Diego

(57) **Abstract**

The present invention relates to device for tensioning wires for supporting the vegetation of plants, preferably orchards and especially vineyards. In particular, the invention relates to a device that is particularly versatile, easy to use and cost-effective to manufacture. The invention also relates to a plant comprising such device and method for supporting plants in rows.

## Description

### FIELD OF THE INVENTION

**.** The present invention relates to device for tensioning wires for supporting the vegetation of plants, preferably orchards and especially vineyards. In particular, the invention relates to a simplified device, that is easy to use and cost-effective to manufacture. The invention also relates to a plant comprising such device and method for supporting plants in rows.

### BACKGROUND OF THE INVENTION

**.** In agriculture, and in particular in the viticulture industry, it is well known to provide support structures for plants consisting of rows of poles driven into the ground so as to form rows. The poles are spaced apart from each other and they are interconnected in their parts protruding from the ground by a horizontal wire, called a "load-bearing wire", which is fixed on said poles at an appropriate height from the ground surface. Furthermore, at least one pair of wires parallel to each other and arranged on respective sides of each pole of the row are fixed on the two poles which are located at the ends of each row, called "head poles". These wires are commonly referred to as "containment wires" or "movable wires" given that, during the various stages of plant cultivation, they are moved to different heights from the ground to contain and organise the growing vegetation according to a desired configuration. As a matter of fact, in winter, when vine shoots are very short or are completely absent, pairs of movable wires are arranged close to the ground. In the spring and summer, when the plants produce ever more luxuriant vegetation, each pair of movable wires is placed progressively further away from the ground in the direction orthogonal to the ground, harnessing the vegetation between the wires of each pair, therefore organising the development thereof according to a desired configuration. This operation is commonly carried out to ensure an increasing exposure of the foliar surface and the fruits of the plants to the sun and wind. Furthermore, this facilitates vegetation treatment operations such as clipping, plant protection treatments and other fully conventional treatments.

**.** It is clear that both the load-bearing wire and the movable wires must be fixed to the ends of the rows and tensioned in order to perform their function correctly. At the same time, especially the movable wires, must be capable of having a certain degree of extensibility to meet the aforementioned need to support the growth of the leaf surface.

**.** Therefore, especially with regard to the movable wires, their tensioning to the pole must comprise an elastically compensating element coupled to a tensioning element to allow the displacement described above on the lateral plane of the system for supporting the plants. A fixing device of this type is described for example in patent EP1699286, wherein the wire tensioning roller formed by a rectilinear metal bar, generally cylindrical or hexagonal, comprising at least one shaped end portion so as to be engaged by a tool such as a hexagonal head key, and a through hole passing in proximity of one of its two end portions which can be engaged by a pin for locking against the unwanted rotation of the roller upon tensioning the load-bearing wire or movable wires. A pair of further through holes are required for the engagement and winding of the movable wires. The roller is mounted on the compensation device represented by a compression spring. The compression spring is formed by three elements, that is an actual spring which is compressed between an element for engaging to the pole and an abutment element.

**.** Other devices are for example described in patents EP3672396 and EP3716755 wherein the abutment element mentioned above of the compression spring is formed by a plate carrying one or more tensioning elements, said plate being engaged or resting on an end of the spring. In other words, the elastically compensating devices of the prior art require three elements to operate and that is two elements for containing a compression spring and the spring, besides the tensioning element.

**.** The tensioning elements may then be formed by a clamp block provided with a solid body provided with at least one internal channel adapted to slide a wire in communication with a ramp cavity adapted to house a device for the selective sliding of said wires in only one direction, while it allows the sliding in the opposite direction. The locking device is for example a spring which acts on a ball element adapted to interact with the wire. Such device is for example described in the patent application WO2016/102907.

**.** Another tensioning element has a body formed by a hollow element having a tapered or conical outer surface and a doughnut-like shaped head fixed to the body for example by welding forming or moulding, and protruding slightly therefrom in radial direction. In the tapered body, near the opening of the narrower side thereof, there are present retention means, for example wedge-shaped elements, which protrude from the internal edges of the body towards the centre of the cavity, closing it partially. Said retention means are associated with an end of a counteracting element formed by a spring operating by compression which, on the other end, abuts against the inner surface of the head. The pressure exerted by the wire at the entrance of the body between the retention means causes the compression of the spring associated therewith and it therefore allows the insertion of the wire into the locking element. Once the pressure exerted by the force for inserting the wire into the locking element has ceased, that is upon reaching the desired degree of tensioning of the wire, the counteracting spring pushes the retention means towards the inoperative position thereof ensuring that they are wedged between the inner surface of the body and the wire preventing the latter from slipping off. In other words, the locking element is internally configured to allow a wire to pass through it only in one direction, preventing, through suitable retention means, the possibility that the latter slips off sliding in the opposite direction, in a manner entirely similar to what happens with the device described in WO2016/102907.

**.** Among the tensioning elements mentioned above, the clamp block (also sold under the trade name GRIPPLE^{®}) or the conical hollow element are particularly valued given that, with a dedicated tool formed by a sort of gripper, they allow for an easy tensioning of the wire and when used individually for an elastically compensating device they do not protrude with respect to the spring.

**.** Despite this, tensioning devices comprising such tensioning elements are however more or less structurally complex given that they require a further support element to be correctly applied to the elastically compensating device, such as for example an abutment plate. As a matter of fact, for example as described in patents EP3672396 and EP3716755, the tensioning elements are mounted on abutment plates of the spring in various ways which may also require rather expensive and complex processing operations.

**.** In addition, besides the above-mentioned complexity, the relative assembly also becomes strenuous as a result.

### SUMMARY OF THE INVENTION

**.** Therefore, the task of the present invention is to provide an elastically compensating device for tensioning wires, in particular for load-bearing wires and movable support wires for vine shoots or plant branches, that overcomes the defects and drawbacks of the devices of the known type like the ones described above.

**.** In the context of the task outlined above, therefore an object of the present invention to provide an elastically compensating device for wires that is very easy to construct and quick to install on a pole of a row of plants, and that is also easy to actuate, assemble and cost-effective to manufacture.

**.** Another object is to provide a compensating device for wires which can be mounted on any type of pole for rows of plants irrespective of the shape and size of the cross-section of the pole.

**.** A further object of the present invention is to provide a device whose overall dimensions do not substantially alter the overall dimensions of the elements on which it is mounted so as not to affect the processing operations especially mechanised along the rows.

**.** An even further object of the present invention is to provide a device, in particular for movable wires for supporting vine shoots or plant branches, substantially without malfunctions.

**.** Other objects are a system for supporting plants in rows and a method for supporting plants in rows comprising such device.

### BRIEF DESCRIPTION OF THE DRAWINGS

**.** The task and objects outlined above are attained by an elastically compensating device having the characteristics outlined in the attached claims. Characteristics and advantages of the invention will be apparent from the following description, provided by way of non-limiting example, with reference to the attached drawings, wherein:
- figure 1 shows a schematic view of a system for supporting a row of vines;
- figure 2 shows an axonometric and exploded view of an elastically compensating device comprising a tensioning element according to the invention;
- figure 3 shows a lateral view of the elastically compensating device of figure 2;
- figure 4 shows a top view of the elastically compensating device of figure 2;
- figure 5 shows a cross-sectional view along the plane V-V of the device of figure 4;
- figure 6 shows an axonometric view of the device of figure 2 in a first step for assembling on a pole;
- figure 7 shows an axonometric view of the device of figure 2 in a second step for assembling on a pole;
- figure 8 shows an axonometric view of the device of figure 2 in a third step for assembling on a pole;
- figure 9 shows an axonometric view of the device of figure 2 in a fourth step for assembling on a pole;
- figure 10 shows an axonometric view of the device of figure 2 in a first step for tensioning a wire;
- figure 11 shows an axonometric view of the device of figure 2 in a second step for tensioning a wire;
- figure 12 shows an axonometric view of the device of figure 2 in a final step for tensioning a wire.

### DETAILED DESCRIPTION OF THE INVENTION

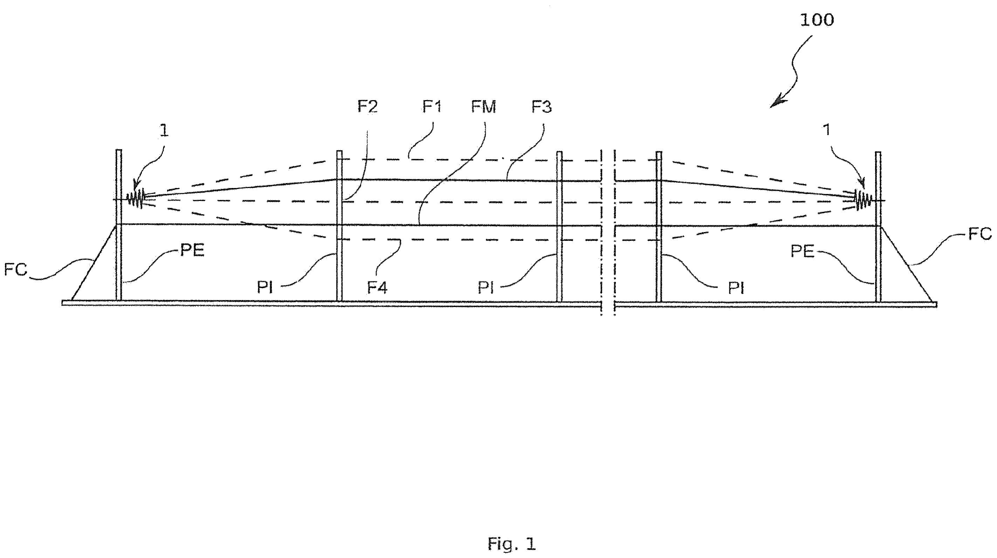

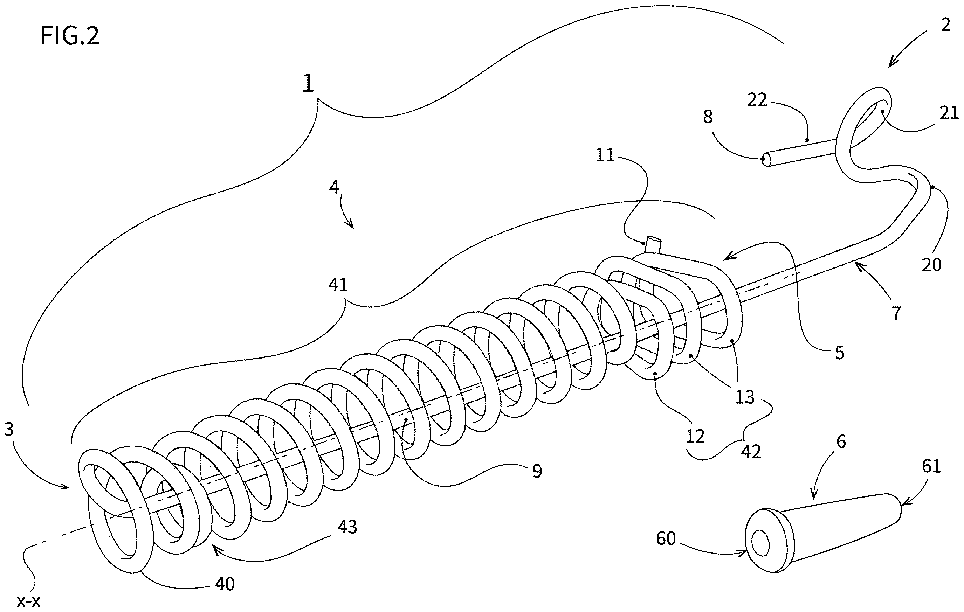

**.** Figure 2 shows in exploded view an elastically compensating device 1 for tensioning wires F for containing the vegetation. This type of device is used in a system 100 for supporting plants in a row. Usually, the plant (figure 1) consists of a plurality of poles arranged aligned and spaced apart from each other. As known, the poles may consist of appropriate elements made of wood, concrete cement or even made of metal or plastic, having cross-sections of different shapes and often provided with elements and/or devices for hooking, even reversible, metal wires thereon. The poles resulting at the ends of the row, called "head poles", are indicated with reference PE and the intermediate ones with PI. On all the poles PE and PI there is fixed at an appropriate height from the ground a fixed wire FM called "load-bearing wire". Furthermore, the head poles are suitably wind-braced by appropriate wind-bracing wires indicated with reference FC. On the two head poles PE there are further provided for elastically compensating devices 1 arranged at an appropriate distance from the ground; in the example shown in figure 1 the elastically compensating devices 1 are arranged in a position higher than the one for fixing the load-bearing wire FM. To each elastically compensating device 1 there is associated a pair of movable wires F which are arranged on both sides of the intermediate poles PI, that is the sides defined by the system. Thanks to the elasticity of the compensation devices 1, the movable wires F may be fixed using simple operations for engaging to suitable support, per se conventional, obtained or applied on the relative intermediate poles PI so as to be positioned at different heights from the ground. In order to highlight the various possible positionings of the movable wires F, a numerical symbol was added to the common reference F. Furthermore, the position of the wire F3 alone is indicated with a solid line while the others, and precisely the positions of the two lower movable wires and that of the wire above the wire F3, are indicated with dashed lines and respectively with references F1, F2 and F4. The movable wires are also called wires for containing the growing vegetation given that in the space defined between them the vegetation is contained and supported during growth. Alternatively, for each elastically compensating device there may be associated a single wire to be tensioned so as to have individual wires that can be moved independently with respect to each other. In this case, there can be fitted two pole devices on the two sides of the pole.

**.** With reference to figures 2-4 described below is an elastically compensating device 1 for tensioning wires F according to the present invention.

**.** This device extends along an axis X-X and comprises a first end portion 2 for hooking to a pole, a second end portion 3 opposite to said first end portion, a compression elastic element 4 between said first and second end portion, a seat 5 for engaging with a wire tensioning element 6, wherein said first and second end portion, said elastic element and said seat are formed by a single shaped wire 7 with a first end 8 which is the end of said first end portion, a rectilinear portion 9 which extends from said first end portion and terminates with a first coil 40 which forms said second end portion, a plurality 41 of coils which extend from said first coil around said rectilinear portion forming said elastic element 4, some end coils 42 of said plurality of coils which form said seat 5 axially with respect to the device and terminating with a second end 11 of said single wire 7.

**.** In particular, the device of the invention is advantageous given that with a single duly shaped wire there are obtained all the elements required to perform the function of an elastically compensating element, leaving separated only the tensioning element, which can however be easily engaged and handled with the compensating element.

**.** The shaped wire 7 is generally made of stainless steel, it has a diameter ranging from 3 mm to 5.5 mm, preferably it measures 3.5 mm and it extends with different segments but without interruptions from the first end 8 to the second end 11.

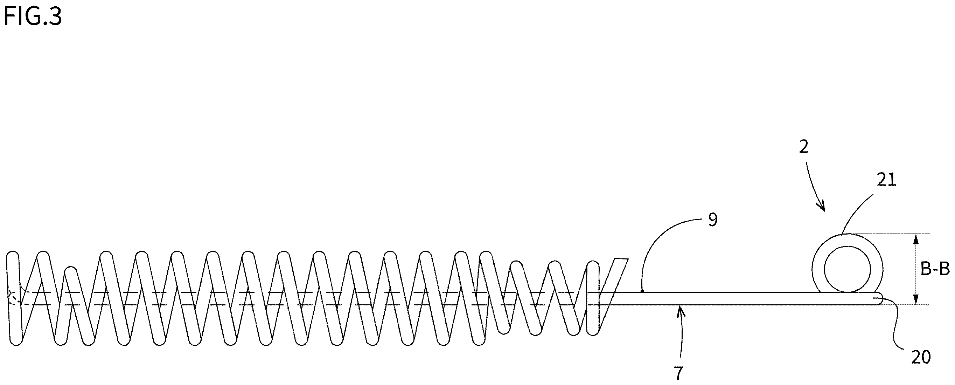

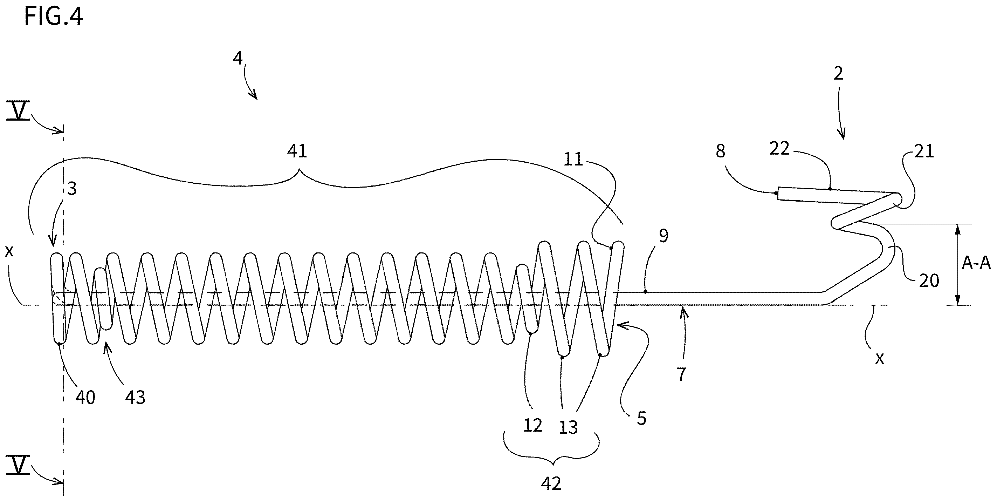

**.** The first end portion 2 of the wire comprises the first end 8 and it is shaped so as to allow the engagement to a head pole PE. This end portion may be shaped to be engaged to any type of pole. As a matter of fact, given the wire-like structure, it can be bent to form a ring with one or more coils substantially closed forming an engagement slot with a hook or chain to be applied to a hole, hook or circumference of a pole made of iron, plastic, concrete or wood. Otherwise, the end portion, as shown in the figures, is formed by a generally hook-shaped bending for engagement with one or more holes of a pole made of steel. Preferably, the bending comprises a first folding 20 generally U-shaped which is the continuation of the rectilinear portion 9 and which lies on a first plane A-A (figure 4) along the axis X-X. This U-shape continues with a ring-like bending 21 facing towards one side of the axis X-X and which extends on a plane B-B (figure 3) that is generally orthogonal to said first plane A-A of the first folding. Said ring 21 continues with a rectilinear portion 22 which extends toward the device and parallel to the axis X-X terminating with said end 8.

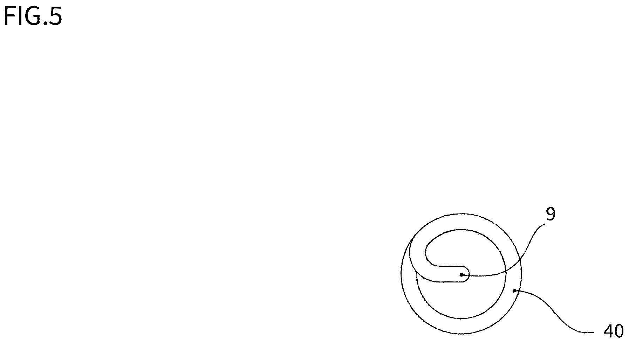

**.** At the second end 3 of the device 1, the wire 7 forms a first coil 40 which lies on a plane V-V (figure 5) orthogonal to said rectilinear portion 9, that is orthogonal to the axis X-X. After the first coil 40, the wire continues with a plurality 41 of coils which are wound around the rectilinear portion 9 towards the first end portion 2 of the device (figures 2 and 4). The number of coils, the pitch and the diameter vary depending on the specific needs or preferences for example determined by the diameter of the wire or by the load to which the wire to be tensioned is to be subjected. In any case, these data are all within the reach of the person skilled in the art when designing a system.

**.** Near the first end 2 of the device, the plurality of coils 41 terminates with the housing seat 5 for a wire tensioning element 6 of clamping type (figures 2 and 4). In particular, such seat is formed by several coils and terminal windings 42 of the plurality of coils 41 such to create a sort of pocket for holding the clamping wire tensioning element 6. Preferably, the seat is formed by a first coil 12 for resting clamped around a segment of the rectilinear portion 9 of the wire 7 and by at least one second containment coil 13. The first coil is closer to the second end portion 3 while at least one second coil terminates with the second end 8 of wire 7.

**.** The tensioning element 6 may be a conventional clamping tensioning element, represented for example by cones or by blocks inside which there is present a channel kept at least partially obturated by a ball or ramp block on which a spring acts. These elements are described for example in patent EP3672396.

**.** Therefore, the seat 5 may be shaped at will so as to accommodate the cones or blocks comfortably and without dangerous clearances or couplings, simply by forming a second coil, or several second coils, with circular ring with conical and/or squared ring development.

**.** According to a variant of the invention, after the first coil 40 mentioned above, the second end portion 3 of the device 1 comprises a second coil 43 which are wound around the rectilinear portion 9 more closely with respect to the first coil and to the subsequent plurality of coils 41. This second coil has the function of stabilising the device especially when subjected to particular compressions, for example during the displacements of the wire upwards and downwards with respect to the horizontal position. As a matter of fact, during such displacements, the plurality of coils 41, that is the elastic element 4, is strongly compressed and tends to bend with respect to the axis X-X. In some situations, for example during the processing operations near the plants, the farming machines could impact the devices bent outwards, with respect to the plane of the row, damaging the devices or the machines.

**.** The second coil 43, instead, tends to keep the wire stretched near if not adhering to the rectilinear portion, therefore in axis with respect to the compression forces exerted on the elastic part of the device. As a result, the folding phenomenon mentioned above is significantly limited if not eliminated, with the advantage of avoiding the protruding dangerously with respect to the vertical plane of the system of the vineyard.

**.** The assembly and the operation of the device of the invention is intuitively simple, safe and effective.

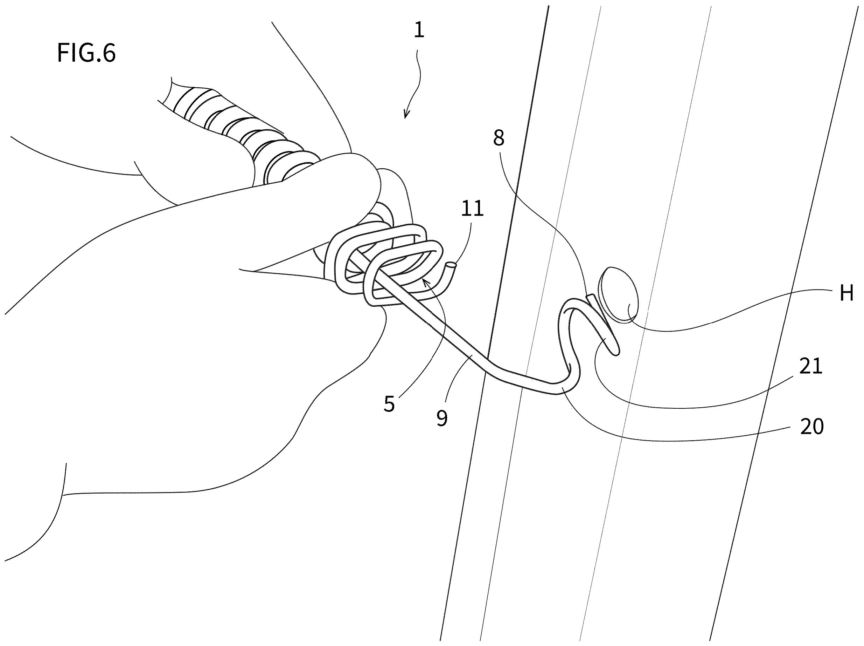

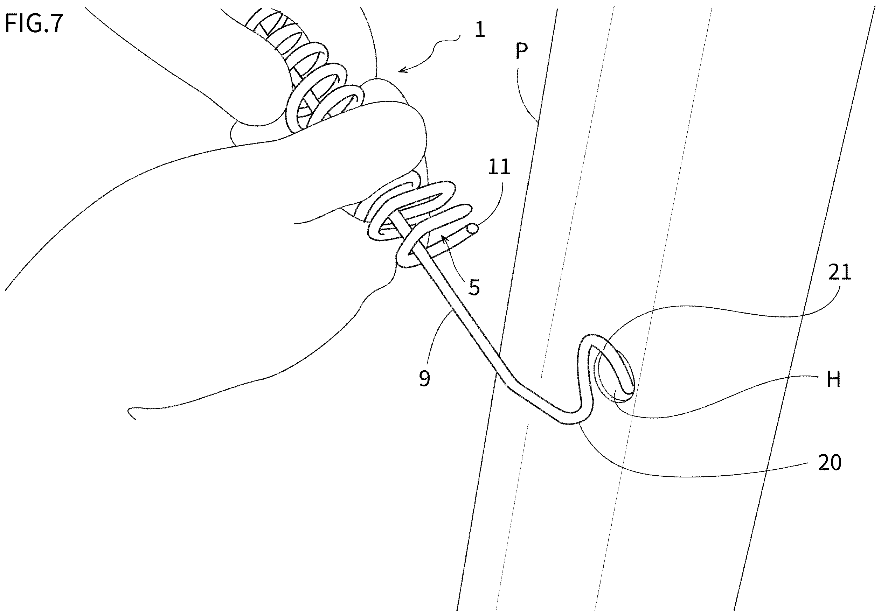

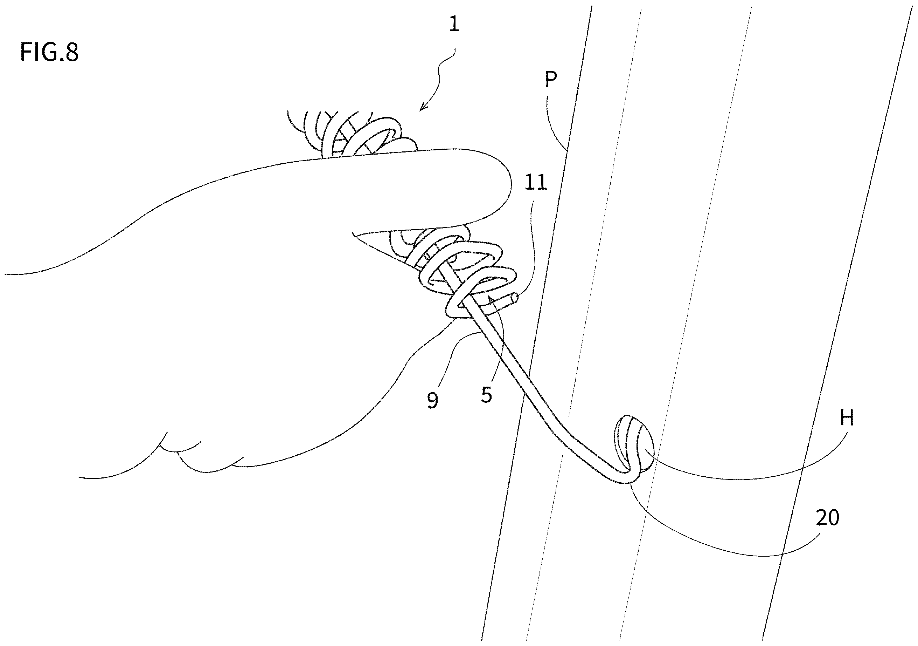

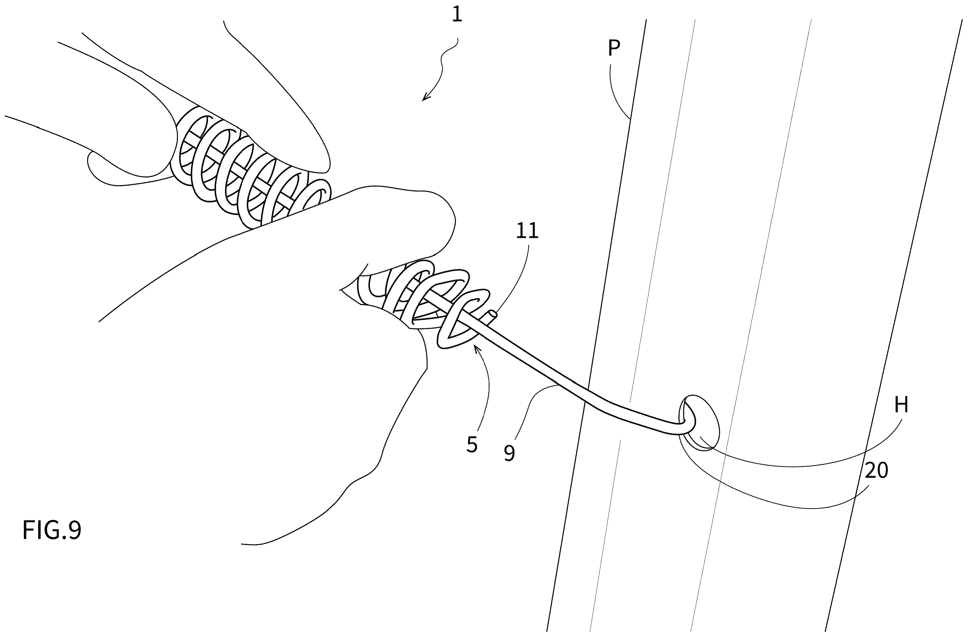

**.** As a matter of fact, with reference to figures 6-9, the device may be engaged to a head pole depending on the conformation of the first end portion. Preferably, as described and represented above, the end 8 and the rectilinear segment 22 is inserted into an iron pole P through one of its conventional side holes H (figure 6). Subsequently, possibly with one or more rotation operations in the clockwise or anticlockwise direction should the hole be small, the ring-like bending 21 is inserted with slight inclination into the pole (figures 7 and 8). Lastly, the U-shaped folding 20 is made to be engaged by the edge of the hole of the pole (figure 9). Therefore, the ring 21 and the rectilinear segment 22 in the pole act as a safety hook against accidental removal of the device by the pole.

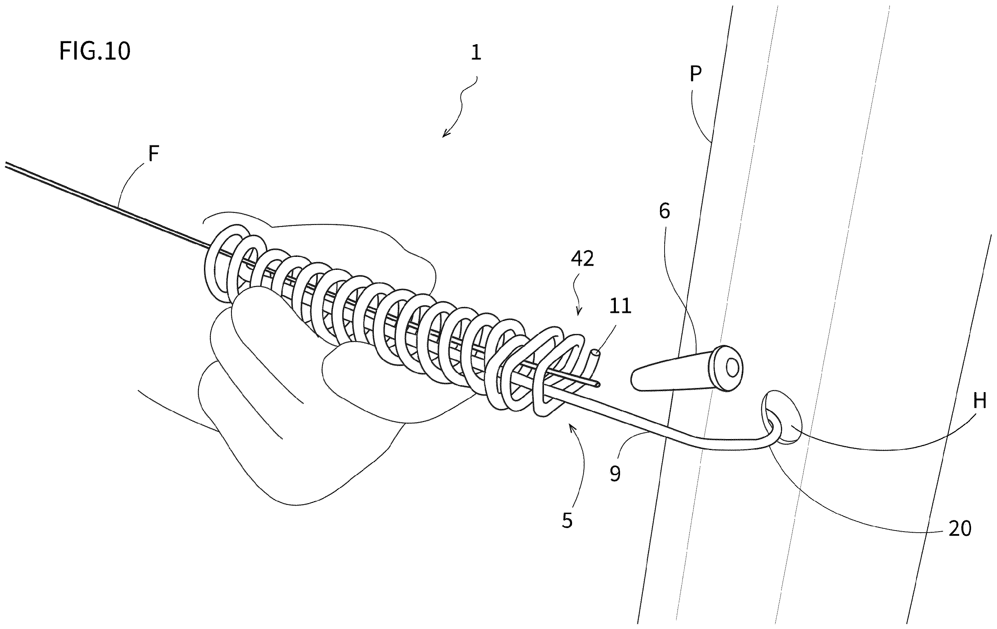

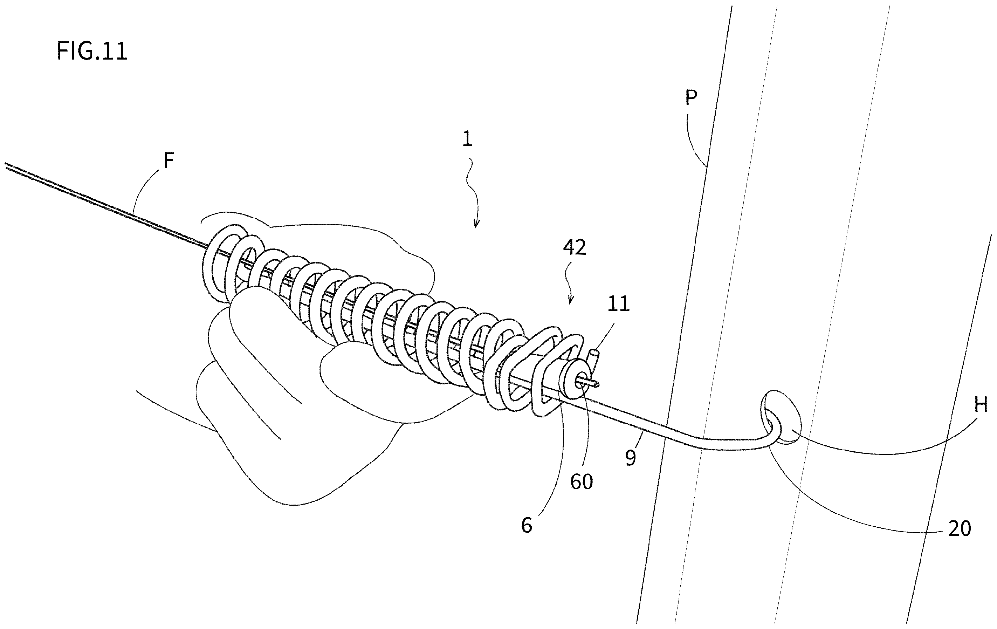

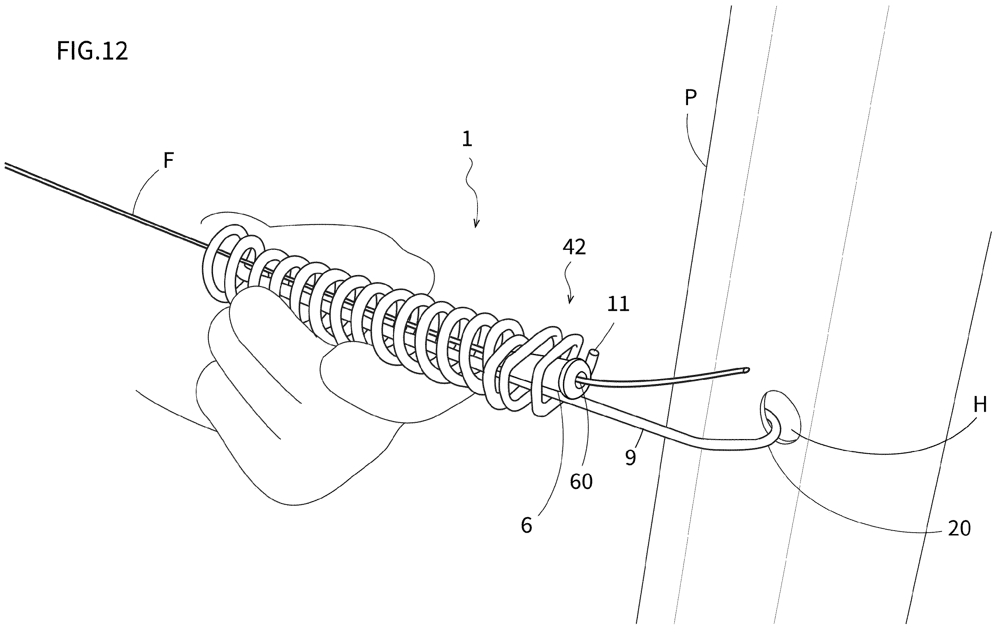

**.** At this point, it suffices to simply insert a wire F to be tensioned into the device from the second end portion 3 until it protrudes from the seat 5 (figure 10), insert a tensioning element 6 into the seat 5 and into the wire receiving hole 61 of block 6, sliding it until it protrudes from the opposite exit hole 60 for a section sufficient to be engaged by a conventional traction tool (figure 11). At this point, the tensioning is obtained according to specific needs by pulling the end of the wire which exits from said hole 60 (figure 12).

**.** A further object of the present invention is a system 100 (figure 1) for supporting rows of plants, comprising at least one end pole PE or head pole secured to the ground using conventional means such as for example concrete bases. Furthermore, the end pole is generally wind-braced using wind-bracing wires FC secured to the ground using conventional anchors.

**.** Alternatively or combined, to the head pole there may be preferably connected a pole driven vertically into the ground through a first profile (not shown) positioned at the upper end portions of said head pole and of the corresponding vertical pole, and possibly through a second section positioned at the lower end portions of said poles driven into the ground so as to constitute a rigid structure which withstands the tension of the wires of the row, as described in patent EP2988589.

**.** Fixed wires FM (or load-bearing wires FF as defined in said patent and distinct from the containment wires instead indicated as FM) are fixed to the two end poles PE at a preestablished and unvaried height so as to support the fruit cane of a plant. Furthermore, these wires are maintained at such height from the ground along the entire system due to the engagement with conventional hooks (not shown) obtained on each intermediate pole PI. These hooks are also distributed along the pole so as to ensure different positioning of the movable wires, as usual, so as to follow and support the extension of the vegetation.

**.** Movable wires F3 are connected, at least at one end portion, to the elastically compensating devices 1 according to the present invention, the devices in turn being fixed to the end poles PE.

**.** Yet another object of the invention is method for supporting plants along rows, comprising the steps of:
- fixing two end poles PE, that are wind-braced using suitable means, into the ground at a predetermined distance;
- arranging in a straight line between said two end poles PE a plurality of intermediate poles PI comprising hooks for reversibly hooking wires F for supporting the plants;
- fixing to said two head poles at least one fixed wire FM for supporting a fruit cane of said plants and a plurality of movable wires F1-F4 on two sides of said head poles so as to cover the entire length of the row in a parallel fashion and delimiting a space for containing the branches of the growing plants, wherein said step for fixing the plurality of movable wires F1-F4 is obtained by means of elastically compensating devices 1 as described above.

**.** In the light of the above, it is clear that the drawbacks of the prior art have been overcome and the significant advantages have been achieved.

**.** First and foremost, the complex structure of the elastically compensating devices been simplified significantly. As a result, the complexity and production times have also been significantly reduced.

**.** Secondly, this simplification enables to avoid problems linked to easier breaking and malfunctions.

**.** Advantageously, providing a single wire element which suitably shaped in all the functional portions obviously significantly reduces production costs and enables an accurate control of the device.

**.** Furthermore, the single wire device does not require any assembly operation specifically due to the fact that it exits from the forming machine already finished, therefore without additional operations.

**.** The first end portion for hooking to the pole can be shaped at will to meet any needs depending on the type of pole to which the device is to be hooked. Preferably, the hook-like shape described and represented in the figures enables to insert using only one hand the terminal portion into a pole through a simple hole already present and prevent it from being released accidentally.

. The seat 5 for the tensioning element allows easy insertion of the tensioning element and its retention totally safely.

. Furthermore, the second coil 43 near the end 3 of the element creates an element for stabilising the straight axis during strong compressions of the spring.

. Further changes to the device of the invention can be implemented by the person skilled in the art without departing from the scope of protection of the attached claims.

## Claims

1. Device (1) for tensioning wires (F) for supporting plants, which extends along an axis (X-X) and comprising a first end portion (2) for hooking to a pole, a second end portion (3) opposite to said first end portion, a compression elastic element (4) between said first and second end portion, a seat (5) for engaging with a wire tensioning element (6) of clamping type, **characterised in that** said first and second end portion, said elastic element and said seat are formed by a single shaped wire (7) with a first end (8) which is the end of said first end portion, a rectilinear portion (9) which extends from said first end portion and terminates with a first coil (40) which forms said second end portion, a plurality (41) of coils which extend from said first coil around said rectilinear portion forming said elastic element (4), some end coils (42) of said plurality of coils which form said seat (5) axially with respect to the device and terminating with a second end (11) of said single wire (7).

2. Device (1) according to claim 1, wherein said first end portion (2) is formed by a generally hook-shaped bending for engagement with one or more holes of a pole.

3. Device (1) according to claim 2, wherein said bending comprises a first folding (20) generally U-shaped which is the continuation of the rectilinear portion (9) and which lies on a first plane (A-A) along the axis (X-X), said U continues with a ring-like bending (21) facing towards one side of the axis (X-X) and which extends on a plane (B-B) generally orthogonal to said first plane (A-A) of the first folding, said ring (21) continues with a rectilinear segment (22) which extends towards the device and parallel to the axis (X-X) terminating with said first end (8).

4. Device (1) according to any one of claims 1 to 3, wherein said seat (5) is formed by a first coil (12) for resting clamped around a segment of the rectilinear portion (9 ) of the wire (7 ) and by at least one second containment coil (16) of said clamping wire tensioning element (6).

5. Device (1) according to any one of claims 1 to 6, wherein after said first coil (40), the second end portion (3) of the device comprises a second coil (42) which winds around said rectilinear portion (9) more closely with respect to both the first coil and the following plurality of coils (41).

6. Method for supporting plants along rows, comprising the steps of:
- fixing two braced end poles (PE), using suitable means, into the ground at a predetermined distance;
- arranging in a straight line between said two end poles (PE ) a plurality of intermediate poles (PI) comprising hooks for reversibly hooking wires (F) for supporting the plants;
- fixing to said two head poles at least one fixed wire (FM ) for supporting a fruit cane of said plants and a plurality of movable wires (F1-F4 ) on two sides of said head poles so as to cover the entire length of the row in a parallel fashion and delimiting a space for containing the branches of the growing plants,
wherein said step of fixing the plurality of movable wires (F1-F4) is obtained by means of elastically compensating devices (1) according to any one of claims 1 to 5.
